# EUROPEAN PATENT SPECIFICATION

(11) **EP 1 116 602 B1**
(45) Date of publication and mention of the grant of the patent: **12.04.2006**
(21) Application number: 01100496.7
(22) Date of filing: 09.01.2001
(51) Int. Cl.: B44C 3/12, B44D 3/00, C03C 17/00, G01J 3/46, B44F 1/06

(54) **Method to make decorations on supports and device therefor**
Verfahren zur Herstellung von Dekorationen auf Unterlagen und Vorrichtung dafür
Procédé de décoration d'un support et dispositif pour cette méthode

(30) Priority: 13.01.2000 IT UD000002
(43) Date of publication of application: 18.07.2001
(73) Proprietor: Dorazi, Gilberto, 33050 Pavia di Udine (UD) (IT)
(72) Inventor: Dorazi, Gilberto, 33050 Pavia di Udine (UD) (IT)
(74) Representative: Petraz, Gilberto Luigi

(56) References cited:
- EP-A- 0 846 575
- DE-A- 3 638 170
- DE-A- 4 124 049
- DE-C- 19 718 303
- US-A- 5 509 966
- DATABASE WPI Section PQ, Week 199431 Derwent Publications Ltd., London, GB; Class P78, AN 1994-253988 XP002150817 & RU 2 005 631 C (ONIKS CO LTD), 15 January 1994 (1994-01-15)
- DATABASE WPI Section Ch, Week 199333 Derwent Publications Ltd., London, GB; Class L01, AN 1993-259270 XP002150818 & CN 1 066 641 A (JIANG Y), 2 December 1992 (1992-12-02)

## Description

### FIELD OF THE APPLICATION

The invention concerns a method to make decorations on supports, and the device able to achieve the method, as set forth in the respective main claims.

The invention is used to reproduce images or decorative and ornamental patterns by depositing colored particles onto supports and attaching them thereto.

Hereafter, for reasons of simplicity, we shall refer mainly to decorations on glass supports, but the invention can also be used to decorate inorganic supports of other types, for example made of metal, ceramic or otherwise.

### BACKGROUND OF THE INVENTION

The state of the art includes various techniques used to achieve decorations on glass supports which provide to deposit colored particles on the surface and attach them thereto.

A first technique consists of ionic coloring, which uses metal oxides which are deposited on the surface of the glass to be decorated and then subjected to high temperature heat treatment. This heat treatment causes the glass to soften and the oxides to decompose, which thus are bonded to the glass.

The results of this technique are very much influenced by the chemical composition of the glass, the type of heat treatment and the atmosphere wherein the treatment is performed. Moreover, the technique is limited because it is difficult to control the characteristics of the colors and because of the small number of chromatic variations which are possible, also the low resolution of the decoration and the methods of production, which are manual and therefore long and costly.

Another technique provides to deposit diskettes of colored glass adjacent to each other on the support, and a subsequent heat treatment with which the diskettes are welded to each other and to the support. In this case too, the process is essentially manual, entails high costs and takes a long time to perform; the results are characterized by a decoration with a poor resolution and are not always satisfactory.

Another technique provides to deposit and attach colored powders, consisting of ground glass or mineral powders, to the glass support. Depending on the type of decoration to be made, the powders are deposited manually, or by means of rollers or with a serigraph method in the case of serial decorations. Irrespective of the method of application, this technique is very limited in the definition and control of the colors.

Another technique provides to use colored glass tesserae, of a transparent, translucent or opaque type which are deposited in a mosaic onto the support and then attached by means of a heat treatment until a partial fusion is obtained, or glued by resins or adhesives which are normally transparent.

Depositing the tesserae is extremely expensive; the decorations obtained with this method, although they are aesthetically pleasing, have geometric and chromatic characteristics which are not very well defined; this makes the technique not suitable for the reproduction of complex patterns characterized by details which are small in size.

All these conventional methods of decoration are thus characterized by considerable technical limitations which negatively affect the quality of the final product, and by production methods which cannot be automated, and which are therefore long and expensive, which lead to an increase in the sales price.

Moreover, these methods rarely allow a faithful reproduction in series of the decorations; this entails a considerable limitation in the application of such decoration techniques on glass in industrial production processes.

Document DE-C-197 18 303 describes all that is contained in the pre-amble to the main claims.

The present Applicant has devised and embodied this invention to overcome these shortcomings and to obtain further advantages.

### SUMMARY OF THE INVENTION

The invention is set forth and characterized in the respective main claims, while the dependent claims describe other characteristics of the invention.

The purpose of the invention is to provide a method and a device which will allow to obtain colored decorations, made by depositing and attaching inorganic colored particles, in their solid, semi-solid, or even liquid state, to inorganic supports, particularly but not only glass, the decorations being characterized by a high chromatic and geometric resolution, and which therefore faithfully reproduce a desired image or a decorative and ornamental pattern.

Another purpose of the invention is to allow, even after a period of time, a precise, serial reproduction of images and/or patterns which constitute the decoration. A further purpose is to automate the process to achieve the colored decorations of the type mentioned in a rapid and inexpensive manner, optimizing the functions of controlling and managing the colors.

The device according to the invention comprises a processing and control unit able to memorize, identify and process images in digitized form which are transmitted to it by means of appropriate acquisition means.

The device also comprises a color store, in which the colored particles are arranged which can be used for the decoration, comprising a plurality of individual distinct deposits, each one containing particles of a specific color.

The processing and control unit comprises a data bank containing digitized information concerning the chromatic and geometric characteristics, previously acquired, of the colored particles and their location inside the color store.

The processing and control unit is also connected to a selection and deposit unit able to pick up the specific colored particles from the store and to deposit them on the support to be decorated.

The selection and deposit unit can cooperate with a positioning plane able to move the support to be decorated according to information imparted by the processing and control unit, and able to cause the correct positioning and distribution of the colored particles by said selection and deposit unit.

The processing and control unit is also able to manage a completion unit which carries out the process of attaching the colored particles to the decorated support.

The invention provides to memorize the decorative image to be reproduced, as acquired by the acquisition means; and to transmit this image in digitized form to the processing and control unit.

After optionally processing the parameters of the digitized image, the processing and control unit provides to recognize and chromatically catalog the individual dots (pixels), or groups of dots, which make up the image, and define a dimensional-numerical-chromatic ratio of correspondence with the colored particles available in the color store.

This ratio of correspondence is based on a specific and pre-set chromatic relation between the color of the dots of the digitized image and the color of the particles in the color store.

In one embodiment, the chromatic relation is based on a criterion of maximum verisimilitude, determined by appropriate mathematical algorithms, between the color of the dots of the digitized image and the color of the particles in the color store.

Once the correspondence has been defined, the processing and control unit activates the selection and deposit unit which provides to reconstruct the digitized image by picking up the specific colored particles selected from the color store and depositing them on the support to be decorated.

At the end of this step, the support and the colored particles deposited thereon are subjected to the attachment processes.

These processes may be of the heat treatment type and lead to the partial fusion with consequent incorporation of the colored particles onto the support.

According to a variant, the attachment processes provide to use transparent or semi-transparent binders applied between the support and the colored particles. According to another variant, the binders are cast onto the colored particles, thus attaching them to the underlying support.

According to a further variant, the decorated support is subjected to supplementary treatments, such as a surface or heat treatment, able to improve the surface and mechanical characteristics of the decorated supports.

The invention thus allows to achieve, in a completely automatic manner, decorations which are extremely precise and defined in their resolution and in their chromatic and geometric characteristics, allowing a considerable saving in terms of costs and production times. Since the digitized images and the information relating to the colored particles used can be filed in an archive, it is also possible to make a faithful reproduction at any moment of a decoration made previously.

### BRIEF DESCRIPTION OF THE DRAWINGS

These and other characteristics of the invention will be clear from the following description of a preferential form of embodiment, given as a non-restrictive example, with reference to the attached drawings wherein:
Fig. 1 is a flow diagram of the method to achieve colored decorations on a support according to the invention;
Fig. 2is a schematic view of the device which achieves the decorations according to the invention;
Figs. 3-5 show examples of products which can be obtained by means of the invention.

### DETAILED DESCRIPTION OF A PREFERENTIAL EMBODIMENT

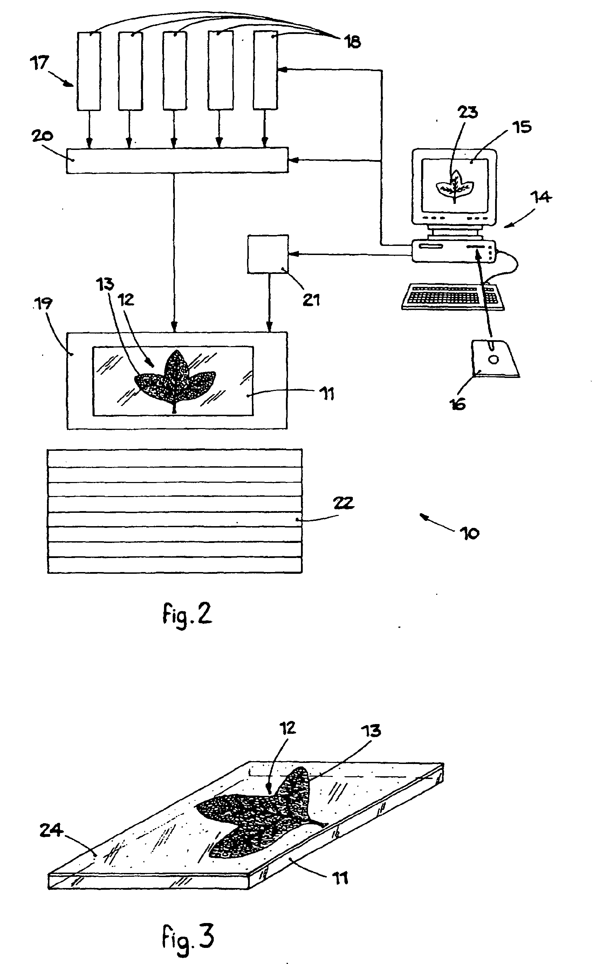

The device according to the invention to achieve colored decorations 12 on a support 11 is shown in schematic form in Fig. 2 and is indicated in its entirety by the reference number 10.

The device 10 allows to achieve decorations, completely automatically, by means of depositing and attaching inorganic colored particles 13 on a desired support 11, also of an inorganic type.

The colored particles 13 can be made of different material and have variable shape and size according to the type of decoration 12 to be made, and according to the nature of the support 11. They may be in a solid, semi-solid or even liquid state.

In the case shown here, the support 11 is made of glass, since this is the preferential application of the invention, but it is possible to use different materials too, such as for example metal or ceramic materials.

The device 10 comprises a processing and control unit 14 able to memorize, identify and process digitized images 23 supplied to it in the form of a graphic file.

In this case, the graphic file is transmitted to the processing and control unit 14 by means of an electronic memorization support 16, but this transmission could be achieved in any other manner.

The processing and control unit 14 comprises a monitor 15 on which the digitized images 23 can be displayed.

The device 10 comprises a color store 17 consisting of a plurality of deposits 18 each containing colored particles 13 of a different color.

The processing and control unit 14 comprises a memory bank containing information concerning the geometric, chromatic and composition characteristics of each type of colored particles 13, and also their quantity and the deposit 18 where they are contained. This information can be up-dated and modified continuously, in relation to the progress of the decoration procedure or to other factors which modify the situation.

A selection and deposit unit 20 cooperates with the color store 17; it is managed by the processing and control unit 14 and is able to selectively pick up the colored particles 13 from the relative deposits 18 and deposit them on the support 11 to be decorated.

In the solution shown, the device 10 also comprises a substantially horizontal positioning plane 19 on which the support 11 to be decorated is able to be placed.

The positioning plane 19 is associated with movement means 21 able to move it horizontally in two orthogonal directions, based on information supplied by the processing and control unit 14 concerning the position in which the individual colored particles 13 have to be deposited in order to complete the decoration 12.

In co-operation with the positioning plane 19 there is also a completion unit 22 able to perform the attachment process to attach the colored particles 13 onto the support 11, and optional supplementary treatments.

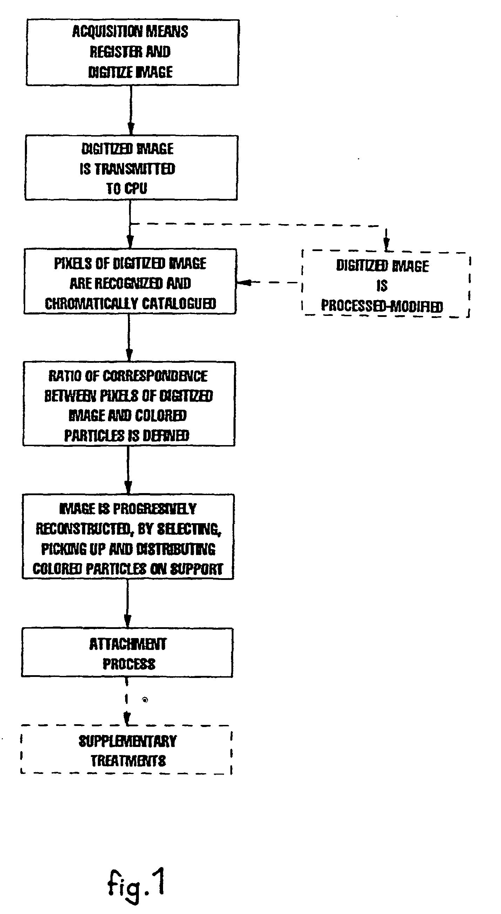

The method to achieve decorations 12 with the device 10 is shown in a flow chart in Fig. 1. It provides first the acquisition, registration and digitization of the image to be decorated by means of means (not shown) which can be of various types, for example a scanner, digital cameras, video cameras or otherwise, according to the nature of the image.

The digitized image 23 is then transmitted to the processing and control unit 14 where it can be processed according to necessity, for example by varying the scale, deformation, variation of the colors, nuancing, contouring, blurring or otherwise.

Subsequently, the processing and control unit 14 performs a recognition and chromatic cataloguing of the dots (pixels) which make up the digitized image 23.

According to a first embodiment, the cataloguing is made for each individual pixel of the digitized image 23. According to a variant, the cataloguing is made for groups of pixels which are near each other and have similar chromatic characteristics.

According to the invention, the cataloguing is made based on a specific colorimetric scale defined by a program with which the processing and control unit 14 is equipped.

In a first embodiment, the colorimetric scale is structured with chromatic coordinates of the "RGB" type. According to a variant, the colorimetric scale is structured with chromatic coordinates of the "CIE" type.

According to a further variant, the classification is made by means of a detection by points, in terms of a specific wave length, relating to the specific curves of transmission and reflection of the individual pixels.

Subsequently, the processing and control unit 14 defines a ratio of colorimetric correspondence between the pixels of the digitized image 23 and the colored particles 13 contained in the color store 17.

The ratio of correspondence is constructed automatically according to pre-set optimization parameters and algorithms relating to the resolution to be obtained to perform the decoration 12, the availability in quantity and color of the colored particles 13, and the size and geometry thereof.

The device also provides that the operator can control continuously and modify, according to his own personal taste, the performance done by the machine acting according to said criteria of maximum verisimilitude.

According to these parameters, the processing and control unit 14 makes a number of colored particles 13 to be used to achieve the decoration 12 correspond with every pixel, or group of pixels, of the digitized image 23; this number is greater, equal or smaller.

The processing and control unit 14 also determines the color of the particles 13 to be used according to a specific chromatic relationship between the color of the pixels of the image 23 and the colored particles 13 present in the color store 17.

This chromatic relation can be, for example, a relation of maximum verisimilitude obtained with specific calculus algorithms, and serves to determine the choice of colored particles 13 with a color as near as possible to that of the dot, or group of dots, under examination.

According to a variant, the chromatic relation is based on specific production choices and/or needs, and determines the selection of colored particles 13 with color at least partly different from that of the dot, or group of dots, under examination.

The ratio of correspondence can be defined by the processing and control unit 14 also according to additive or subtractive properties of the colors, choosing colored particles 13 of a different color to be used together to obtain a single chromatic tone.

In a variant, the ratio of correspondence takes into account the limits of discrimination of the human eye, and determines a combination of particles 13 which, making an integral over a defined area, achieve a ratio of maximum verisimilitude with a number "n" of pixels of the image to be reproduced.

At the end of this step, the processing and control unit 14 activates the selection and deposit unit 20 which, according to the ratio of correspondence defined and the ratio of size chosen, progressively and automatically reconstructs the digitized image 23, removing specific colored particles 13 from the individual deposits 18 and depositing them onto the support 11.

The distribution of the colored particles 13 on the support 11 is made by means of the coordinated activation of the selection and deposit unit 20 and of the positioning plane 19 which, moved according to the information supplied by the unit 14, causes a progressive displacement of the support 11 according to the position which each individual colored particle 13 has to assume thereon.

According to a variant which is not shown here, the distribution of the colored particles 13 is performed by means of a selection and deposit unit which is movable with respect to the support 11, as the latter is arranged on a fixed plane. In a variant, the support 11 is first sprinkled with a substance able to prevent the colored particles 13 from slipping on its surface.

According to the invention, the colored particles 13 are able to be distributed on the support 11 according to predetermined alignments and/or reticules, or in an misaligned, non-ordered manner, according to the type of final effect which is to be obtained.

When the distribution of the colored particles 13 has been terminated, the decorated support 11 is taken into correspondence with the completion unit 22 for the attachment process with which the decoration 12 is definitively constrained to the support 11.

In one embodiment of the invention, the completion unit 22. comprises an oven where the support 11 and the colored particles 13 are subjected to heat treatment which takes them to a state of partial fusion, causing them to be reciprocally incorporated.

According to a variant which is not shown here, a plate of transparent glass is applied above the support 11 to form a sandwich which encloses the colored particles 13; the whole is then introduced into an oven to partly fuse the support 11 and the plate of glass, and incorporate the colored particles 13.

According to a variant, the completion unit 22 comprises means able to distribute a binding substance 24 (resin or glue) of a transparent type with which the support 11 is sprinkled to attach the decoration 12.

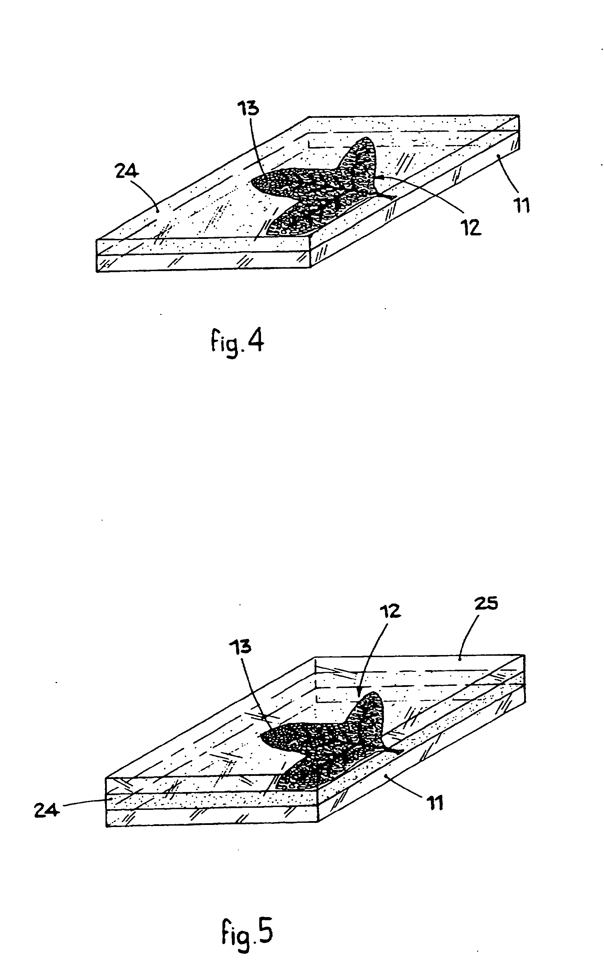

In this embodiment, the decoration 12 can be partly covered by the binding substance 24 (Fig. 3), that is, completely immersed in a more consistent layer of said binding substance 24 (Fig. 4) to obtain a particular aesthetic effect. Moreover, a transparent closing element 25 can be superimposed over and associated with the layer of binding substance 24 (Fig. 5).

By using a support 11 and a closing element 25 made of glass, this particular solution allows to achieve stratified decorated glass pieces with excellent characteristics of safety and insulation, both heat and acoustic.

According to a variant, the support 11 is removed at the end of the attachment step and the decoration 12 remains associated only to the layer of binder 24.

According to the invention, the decorated support 11, at the end of the attachment process, can be subjected to supplementary physical and/or heat treatments to improve its characteristics. The purpose of these supplementary treatments is to make the decorated surface uniform and compact, improving the adherence of the colored particles 13 to the support 11 and eliminating any possible imperfections and/or defects on the surface of the decoration 12.

Another purpose of these treatments is to reduce the surface tensions of the decoration 12 and the support 11 to improve their mechanical characteristics and to prevent breakages or lesions, allowing further work to be carried out, for example, making cuts or holes, smoothing, engraving or otherwise.

The unit 14 is also able to signal malfunctions or anomalous situations in the device 10 and supply information concerning the decoration process under way (for example the working time, the number of colored particles 13 to be used, etc.). Moreover, the unit 14 comprises a memory to register the working parameters and the materials used to achieve the individual decorations 12, so that at any moment those decorations 12 can be reproduced in an extremely precise manner and also in great quantities.

Modifications and variants can be made to this invention, but they shall all remain within the field and scope thereof.

## Claims

1. Method to achieve colored decorations on supports (11), said decorations reproducing a desired image and to deposit and attach a plurality of colored particles (13) onto the support (11) to be decorated whereby the method comprises the step of
- acquisition, registration, digitization and possible processing of an image to be reproduced on the support (11); and the method being **characterized in that** it is performed in a completely automatic manner and provides at least the following steps:
- acquisition, cataloguing and memorization in a data bank of the chromatic and geometric characteristics of a plurality of colored particles (13) to be used to decorate the support (11);
- recognition and chromatic cataloguing of the individual pixels which compose the digitized image (23);
- definition of a desired numeric-chromatic ratio of correspondence between the pixels of the digitized image (23) and the individual colored particles (13);
- selection, pick up and distribution on the support (11) of the colored particles (13) chosen according to the predefined ratio of correspondence with said pixels of the digitized image (23);
- process of attachment of the colored particles (13) to the support (11).

2. Method as in Claim 1, **characterized in that** the chromatic cataloguing of the pixels of the digitized image (23) and of the colored particles (13) is carried out in relation to a colorimetric scale structured with "RGB" chromatic coordinates.

3. Method as in Claim 1, **characterized in that** the chromatic cataloguing of the pixels of the digitized image (23) and of the colored particles (13) is carried out in relation to a colorimetric scale structured with "CIE" chromatic coordinates.

4. Method as in Claim 1, **characterized in that** the chromatic cataloguing of the pixels of the digitized image (23) and of the colored particles (13) is carried out based on the detection by points, in terms of wave length, relating to the curves of transmission and reflection of light.

5. Method as in Claim 1, **characterized in that** said numeric-chromatic ratio of correspondence provides to correlate each pixel, or group of pixels, of the digitized image (23) with a defined number, greater, smaller or equal; of colored particles (13).

6. Method as in Claim 1, **characterized in that** said numeric-chromatic ratio of correspondence is based on a ratio of maximum chromatic verisimilitude, implemented by means of optimization algorithms, between the pixels of the digitized image (23) and the colored particles (13).

7. Method as in Claim 6, **characterized in that** the ratio of maximum chromatic verisimilitude between pixels and colored particles (13) is calculated by making an integral over an area covering a number "n" of pixels, the amplitude of said area taking into account the limits of discrimination of the human eye.

8. Method as in Claim 1, **characterized in that** the colored particles (13) are deposited onto the support (11) by means of automatically moving the support (11) according to the position which said colored particles (13) have to assume.

9. Method as in Claim 1, **characterized in that** the colored particles (13) are deposited onto the support (11) by means of moving the colored particles (13) with respect to the support (11) which is held stationary.

10. Method as in Claim 1, **characterized in that** the attachment of the colored particles (13) onto the support (11) provides a heat treatment which determines a partial fusion and consequent welding of the parts.

11. Method as in Claim 10, **characterized in that** it provides to apply a plate of transparent glass above the support (11) to form a sandwich which encloses said colored particles (13), and a subsequent heat treatment to cause the partial fusion of said support (11) and the plate, with the colored particles (13) being incorporated and the parts being welded.

12. Method as in Claim 1, **characterized in that** the attachment of the colored particles (13) onto the support (11) provides the distribution of a transparent binding substance (24) on said support (11) and on said colored particles (13).

13. Method as in Claim 12, **characterized in that** it provides to superimpose a substantially transparent closing element (25) over said binding substance (24).

14. Method as in Claim 1, **characterized in that** it provides supplementary mechanical and/or heat treatments on the support (11) and the decoration (12) at the end of the attachment process.

15. Device to achieve colored decorations on supports (11), with the method as in any claim hereinbefore, the device being **characterized in that** it comprises at least a processing and control unit (14) able to catalog and memorize the geometric and chromatic characteristics of the colored particles (13), and to identify, catalog and process digitized images (23) to be reproduced, a color store (17) for the selective storage of said colored particles (13), a selection and deposit unit (20), able to selectively pick up the colored particles (13) from said color store (17) and distribute them onto the support (11), and a completion unit (22) able to attach the colored particles (13) onto said support (11), said processing and control unit (14) being able to manage automatically said color store (17), said selection and deposit unit (20) and said completion unit (22).

16. Device as in Claim 15, **characterized in that** said color store (17) is organized into a plurality of deposits (18), each containing colored particles (13) of a different color and/or shape and/or size.

17. Device as in Claim 15, **characterized in that** it comprises a movable positioning plane (19) able to selectively move, at least in a longitudinal and transversal direction the support (11) in the plane in which it lies whereby said selection and deposit unit (20) cooperates with said movable positioning plane (19) the drive of said positioning plane (19) being commanded by said processing and control unit (14).

18. Device as in Claim 15, **characterized in that** said completion unit (22) consists of an oven.

19. Device as in Claim 17, **characterized in that** said completion unit (22) consists of a device to distribute binding substances (24).

20. Device as in Claim 15, **characterized in that** said processing and control unit (14) is able to store data for the serial reproduction of the decorations (12).

## Patentansprüche

1. Verfahren zur Herstellung von farbigen Dekorationen auf Unterlagen (11), wobei diese Dekorationen ein gewünschtes Bild wiedergeben, sowie zur Ablagerung und zum Fixieren von mehreren farbigen Teilchen (13) auf der zu dekorierenden Unterlage (11), wobei das Verfahren die Erfassung, den Eintrag, die Digitalisierung und die eventuelle Verarbeitung eines auf die Unterlage (11) wiederzugebenden Bildes umfaßt, **dadurch gekennzeichnet, daß** es völlig selbsttätig durchgeführt wird und mindestens folgende Schritte vorsieht:
- Erfassung, Katalogisierung und Speicherung in einer Datenbank der chromatischen und geometrischen Eigenschaften von mehreren farbigen Teilchen (13), die zum Dekorieren der Unterlage (11) verwandt werden sollen;
- Erkennung und Farbenkatalogisierung der einzelnen Pixels, welche das digitalisierte Bild (23) bilden;
- Bestimmung eines gewünschten numerischenchromatischen Übereinstimmungsverhältnisses zwischen den Pixels des digitalisierten Bildes (23) und den einzelnen farbigen Teilchen (13);
- Auswahl, Entnahme und Verteilung auf der Unterlage (11) der farbigen Teilchen (13), die auf Grund des vorbestimmten Übereinstimmungsverhältnis mit diesen Pixels des digitalisierten Bildes (23) gewählt werden;
- Behandlung zum Fixieren der farbigen Teilchen (13) auf der Unterlage (11).

2. Verfahren nach Anspruch 1, **dadurch gekennzeichnet, daß** die Farbenkatalogisierung der Pixels des digitalisierten Bildes (23) und der farbigen Teilchen (13) mit Bezug auf eine Farbskala, welche mit "RGB"-Farbenkoordinaten strukturiert ist, durchgeführt wird.

3. Verfahren nach Anspruch 1, **dadurch gekennzeichnet, daß** die Farbenkatalogisierung der Pixels des digitalisierten Bildes (23) und der farbigen Teilchen (13) mit Bezug auf eine Farbskala, welche mit "CIE"-Farbenkoordinaten strukturiert ist, durchgeführt wird.

4. Verfahren nach Anspruch 1, **dadurch gekennzeichnet, daß** die Farbenkatalogisierung der Pixels des digitalisierten Bildes (23) und der farbigen Teilchen (13) auf Grund der die Wellenlänge betreffenden Punkterkennung entsprechend der Lichtrückstrahlungs- und Lichtübertragungskurve durchgeführt wird.

5. Verfahren nach Anspruch 1, **dadurch gekennzeichnet, daß** dieses numerische-chromatische Übereinstimmungsverhältnis die Korrelation jedes Pixels, oder jeder Pixelgruppe, des digitalisierten Bildes (23) mit einer bestimmten höheren, niedrigeren oder gleichen Anzahl von farbigen Teilchen (13) vorsieht.

6. Verfahren nach Anspruch 1, **dadurch gekennzeichnet, daß** dieses numerische-chromatische Übereinstimmungsverhältnis auf einem Verhältnis von höchster, durch Optimierungsalgorithmen implementierter Farbenwahrscheinlichkeit zwischen den Pixels des digitalisierten Bildes (23) und den farbigen Teilchen (13) beruht.

7. Verfahren nach Anspruch 6, **dadurch gekennzeichnet, daß** das Verhältnis von höchster Farbenwahrscheinlichkeit zwischen den Pixels und den farblichen Teilchen (13) durch das Bilden eines Integrals auf einer eine Anzahl von "n" Pixels deckenden Fläche berechnet wird, wobei die Weite dieser Fläche die Diskriminationsgrenzen des menschlichen Auges berücksichtigt.

8. Verfahren nach Anspruch 1, **dadurch gekennzeichnet, daß** die farbigen Teilchen (13) auf der Unterlage (11) durch die automatische Bewegung der Unterlage (11) abgelagert werden, und zwar gemäß der Lage, die diese farbigen Teilchen (13) annehmen müssen.

9. Verfahren nach Anspruch 1, **dadurch gekennzeichnet, daß** die farbigen Teilchen (13) auf der Unterlage (11) durch die Bewegung der farbigen Teilchen (13) abgelagert werden, und zwar mit Bezug auf die Unterlage (11), die feststehend gehalten wird.

10. Verfahren nach Anspruch 1, **dadurch gekennzeichnet, daß** das Fixieren der farbigen Teilchen (13) auf der Unterlage (11) eine Wärmebehandlung vorsieht, welche ein Teilschmelzen und die darauffolgende Verbindung der Teilen bewirkt.

11. Verfahren nach Anspruch 10, **dadurch gekennzeichnet, daß** es die Anbringung einer durchsichtigen Glasscheibe auf der Unterlage (11) zur Bildung eines diese farbigen Teilchen (13) enthaltenden Sandwiches und eine darauffolgende Wärmebehandlung zum Bewirken der Teilverbindung dieser Unterlage (11) und der Glasscheibe vorsieht, wobei die farbigen Teilchen (13) aufgenommen und die Teile verbunden werden.

12. Verfahren nach Anspruch 1, **dadurch gekennzeichnet, daß** das Fixieren der farbigen Teilchen (13) auf der Unterlage (11) die Verteilung eines durchsichtigen Bindemittels (24) auf dieser Unterlage (11) und diesen farbigen Teilchen (13) vorsieht.

13. Verfahren nach Anspruch 12, **dadurch gekennzeichnet, daß** es das Legen eines wesentlich durchsichtigen Schließmittels (25) auf diesem Bindemittel (24) vorsieht.

14. Verfahren nach Anspruch 1, **dadurch gekennzeichnet, daß** es zusätzliche mechanische Behandlungen und/oder Wärmebehandlungen der Unterlage (11) und der Dekoration (12) am Ende des Fixierprozesses vorsieht.

15. Vorrichtung zur Herstellung von farbigen Dekorationen auf Unterlagen (11) durch das Verfahren nach dem einen oder dem anderen der vorhergehenden Ansprüche, **dadurch gekennzeichnet, daß** sie mindestens eine für das Katalogisieren und Speichern der chromatischen und geometrischen Eigenschaften der farbigen Teilchen (13) sowie für das Identifizieren, Katalogisieren und Verarbeiten der wiederzugebenden digitalisierten Bilder (23) geeignete Verarbeitungs- und Überwachungseinheit (14), einen Speicher der Farben (17) zur selektiven Speicherung dieser farbigen Teilchen (13), eine für die selektive Entnahme von den farbigen Teilchen (13) aus diesem Speicher der Farben (17) und für ihre Verteilung auf der Unterlage (11) geeignete Auswahl- und Ablagerungseinheit (20) und eine für das Fixieren der farbigen Teilchen (13) auf dieser Unterlage (11) geeignete Ergänzungseinheit (22) umfaßt, wobei diese Verarbeitungs- und Überwachungseinheit (14) für die selbsttätige Führung dieses Speichers der Farben (17), dieser Auswahl- und Ablagerungseinheit (20) und dieser Ergänzungseinheit (22) geeignet ist.

16. Vorrichtung nach Anspruch 15, **dadurch gekennzeichnet, daß** dieser Speicher der Farben (17) in mehreren Lagern (18) gegliedert ist, wobei jedes Lager farbige Teilchen (13) verschiedener Farbe und/oder Gestaltung und/oder Abmessungen enthält.

17. Vorrichtung nach Anspruch 15, **dadurch gekennzeichnet, daß** sie eine bewegliche, für die selektive Bewegung der Unterlage (11) auf ihrer Liegeebene mindestens in Längs- und Querrichtung geeignete Positionierplatte (19) umfaßt, so daß diese Auswahl- und Ablagerungseinheit (20) mit dieser beweglichen Positionierplatte (19) zusammenwirkt, wobei die Betätigung dieser Positionierplatte (19) durch diese Verarbeitungs- und Überwachungseinheit (14) gesteuert ist.

18. Vorrichtung nach Anspruch 15, **dadurch gekennzeichnet, daß** diese Ergänzungseinheit (22) aus einem Ofen besteht.

19. Vorrichtung nach Anspruch 15, **dadurch gekennzeichnet, daß** diese Ergänzungseinheit (22) aus einer Vorrichtung zur Verteilung von Bindemitteln (24) besteht.

20. Vorrichtung nach Anspruch 15, **dadurch gekennzeichnet, daß** diese Verarbeitungs- und Überwachungseinheit (14) für die Datenspeicherung zur Serienwiedergabe der Dekorationen (12) geeignet ist.

## Revendications

1. Procédé de réalisation de décorations colorées sur des supports (11), lesdites décorations représentant une image voulue, et de dépôt et fixation d'une pluralité de particules de couleur (13) sur le support (11) à décorer, dans lequel le procédé comprend les phases d'acquisition, enregistrement, digitalisation et élaboration éventuelle d'une image à représenter sur le support (11), le procédé étant **caractérisée en ce qu'**il est exécuté d'une manière totalement automatique et qu'il prévoit au mois les phases suivantes:
- acquisition, catalogage et mise en mémoire dans une banque de données des caractéristiques chromatiques et géométriques d'une pluralité de particules de couleur (13) à utiliser pour décorer le support (11);
- identification et catalogage chromatique de chaque pixel qui compose l'image digitalisée (23);
- définition d'un rapport numérique-chromatique voulu de correspondance entre les pixels de l'image digitalisée (23) et chaque particule de couleur (13);
- sélection, prélèvement et distribution sur le support (11) des particules de couleur (13) choisies selon le rapport de correspondance prédéfini avec lesdits pixels de l'image digitalisée (23);
- procédé de fixation des particules de couleur (13) sur le support (11).

2. Procédé selon la revendication 1, **caractérisé en ce que** le catalogage chromatique des pixels de l'image digitalisée (23) et des particules de couleur (13) est exécuté par référence à une échelle colorimétrique structurée avec coordonnées chromatiques "RGB".

3. Procédé selon la revendication 1, **caractérisé en ce que** le catalogage chromatique des pixels de l'image digitalisée (23) et des particules de couleur (13) est exécuté par référence à une échelle colorimétrique structurée avec coordonnées chromatiques "CIE".

4. Procédé selon la revendication 1, **caractérisé en ce que** le catalogage chromatique des pixels de l'image digitalisée (23) et des particules de couleur (13) est exécuté sur la base de la détection par points, en termes de longueur d'onde, relative aux courbes de transmission et réflexion de la lumière.

5. Procédé selon la revendication 1, **caractérisé en ce que** ledit rapport numérique-chromatique de correspondance prévoit la corrélation de chaque pixel, ou groupe de pixels, de l'image digitalisée (23) avec un nombre défini, plus grand, plus petit ou égal, de particules de couleur (13).

6. Procédé selon la revendication 1, **caractérisé en ce que** ledit rapport numérique-chromatique de correspondance est fondé sur un rapport de vraisemblance chromatique maximum, réalisé par des algorithmes d'optimisation, entre les pixels de l'image digitalisée (23) et les particules de couleur (13).

7. Procédé selon la revendication 6, **caractérisé en ce que** le rapport de vraisemblance chromatique maximum entre les pixels et les particules de couleur (13) est calculé par l'exécution d'un intégrale sur une surface couvrant un nombre "n" de pixels, les dimensions de ladite surface tenant compte des limites de discrimination de l'oeil humain.

8. Procédé selon la revendication 1, **caractérisé en ce que** les particules de couleur (13) sont déposées sur le support (11) par le mouvement automatique du support (11) selon la position que lesdites particules de couleur (13) doivent prendre.

9. Procédé selon la revendication 1, **caractérisé en ce que** les particules de couleur (13) sont déposées sur le support (11) par le mouvement des particules de couleur (13) par rapport au support (11) qui est maintenu ferme.

10. Procédé selon la revendication 1, **caractérisé en ce que** la fixation des particules de couleur (13) sur le support (11) prévoit un traitement thermique qui comporte une fusion partielle et la soudure résultante des parties.

11. Procédé selon la revendication 10, **caractérisé en ce qu'**il prévoit l'application d'une feuille de verre transparente sur le support (11) pour former un sandwich qui renferme lesdites particules de couleur (13), et un traitement thermique suivant qui comporte la fusion partielle dudit support (11) et de la feuille, les particules de couleur (13) étant incorporées et les parties étant soudées.

12. Procédé selon la revendication 1, **caractérisé en ce que** la fixation des particules de couleur (13) sur le support (11) prévoit la distribution d'une substance liante transparente (24) sur ledit support (11) et sur lesdites particules de couleur (13).

13. Procédé selon la revendication 12, **caractérisé en ce qu'**il prévoit la superposition d'un élément de fermeture (25) fondamentalement transparent sur ladite substance liante (24).

14. Procédé selon la revendication 1, **caractérisé en ce qu'**il prévoit des traitements mécaniques et/ou thermiques supplémentaires du support (11) et de la décoration (12) à la fin du procédé de fixation.

15. Dispositif de réalisation de décoration colorées sur des supports (11) par le procédé selon l'une ou l'autre des revendications précédentes, le dispositif étant **caractérisé en ce qu'**il comprend au moins une unité d'élaboration et de contrôle (14) apte à cataloguer et à mettre en mémoire les caractéristiques chromatiques et géométriques des particules de couleur (13) et à identifier, cataloguer et élaborer des images digitalisées (23) à représenter, un stock de couleurs (17) pour le stockage sélectif desdites particules de couleur (13), une unité de sélection et de dépôt (20) apte à prélever sélectivement les particules de couleur (13) dudit stock de couleurs (17) et à les distribuer sur le support (11), et une unité d'achèvement (22) apte à fixer les particules de couleur (13) sur ledit support (11), ladite unité d'élaboration et de contrôle (14) étant apte à gérer automatiquement ledit stock de couleurs (17), ladite unité de sélection et de dépôt (20) et ladite unité d'achèvement (22).

16. Dispositif selon la revendication 15, **caractérisé en ce que** ledit stock de couleurs (17) est organisé dans une pluralité de dépôts (18), chacun contenant des particules de couleur (13) ayant une couleur et/ou une forme et/ou des dimensions différentes.

17. Dispositif selon la revendication 15, **caractérisé en ce qu'**il comprend un plan de positionnement mobile (19) apte à mouvoir sélectivement, au moins dans une direction longitudinale et transversale, le support (11) sur le plan sur lequel il est disposé, de sorte que ladite unité de sélection et de dépôt (20) coopère avec ledit plan de positionnement mobile (19), l'actionnement dudit plan de positionnement (19) étant commandé par ladite unité d'élaboration et de contrôle (14).

18. Dispositif selon la revendication 15, **caractérisé en ce que** ladite unité d'achèvement (22) est constituée d'un four.

19. Dispositif selon la revendication 17, **caractérisé en ce que** ladite unité d'achèvement (22) est constituée d'un dispositif de distribution de substances liantes (24) .

20. Dispositif selon la revendication 15, **caractérisé en ce que** ladite unité d'élaboration et de contrôle (14) est apte à mettre en mémoire des données pour la reproduction en série des décorations (12).
